# EUROPÄISCHE PATENTSCHRIFT

(11) **EP 1 678 891 B1**
(45) Veröffentlichungstag und Bekanntmachung des Hinweises auf die Patenterteilung: **09.05.2007**
(21) Anmeldenummer: 04791268.8
(22) Anmeldetag: 21.10.2004
(51) Int. Cl.: H04L 12/56, H04L 12/28

(54) **VERFAHREN ZUR ERMITTLUNG EINES PFADES IN EINEM LOKALEN FUNKKOMMUNIKATIONSSYSTEM**
METHOD FOR DETERMINING A ROUTING IN A LOCAL RADIO COMMUNICATIONS SYSTEM
PROCEDE POUR DETERMINER UN CHEMIN DANS UN SYSTEME DE COMMUNICATION RADIO LOCAL

(30) Priorität: 31.10.2003 DE 10350904
(43) Veröffentlichungstag der Anmeldung: 12.07.2006
(73) Patentinhaber: SIEMENS AKTIENGESELLSCHAFT, 80333 München (DE)
(72) Erfinder: GRUBER, Ingo, 80634 München (DE); CHEN, Hui, 81243 München (DE); LI, Hui, Chaoyang District, 100102 Beijing (CN); YU, Dan, Haidian District, 100085 Beijing (CN)
(86) Internationale Anmeldenummer: PCT/EP2004/052599
(87) Internationale Veröffentlichungsnummer: WO 2005/043836

(56) Entgegenhaltungen:
- WO-A1-02/084956
- US-A1- 2003 156 558
- US-A1- 2003 202 469

## Beschreibung

Die Erfindung betrifft ein Verfahren zum Betreiben eines Funkkommunikationssystems nach dem Oberbegriff des Anspruchs 1, eine Funkstation für ein Funkkommunikationssystem nach dem Oberbegriff des Anspruchs 9 und ein Computerprogrammprodukt für eine Funkstation nach dem Oberbegriff des Anspruchs 10.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen, Funkzugangspunkte oder Basisstationen handeln. Das Abstrahlen der elektromagnetischen Wellen erfolgt dabei mit Trägerfrequenzen, die in dem für das jeweilige System vorgesehenen Frequenzband liegen.

Funkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend aus Basisstationen, Einrichtungen zur Kontrolle und Steuerung der Basisstationen und weiteren netzseitigen Einrichtungen ausgebildet. Für das eingeführte zellulare GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) und auch digitale Daten.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den WLANs abgedeckten Zellen sind mit einem Durchmesser von bis zu einigen hundert Metern im Vergleich zu üblichen Mobilfunkzellen so klein, dass sie Mikrozellen genannt werden. Unter lokalen Netzen (LANs, Local Area Networks) versteht man in der Regel Kommunikationsnetze mit einer Ausdehnung von einigen 10 Metern bis hin zu 10 Kilometern. Die Mehrheit der LANs dehnt sich jedoch nur über einige hundert Meter innerhalb von Gebäuden oder einer Organisation aus (Inhouse-Netze).

Beispiele verschiedener Standards für WLANs sind HiperLAN, DECT, IEEE 802.11, Bluetooth und WATM. Als lokale funkgestützte Netze scheinen sich jedoch derzeit vor allem in den USA und Europa fast ausschließlich Produkte auf Basis der IEEE 802.11-Familie durchzusetzen. Die gemäß IEEE 802.11b-Standard definierte Funkschnittstelle zum Zugriff auf lokale Netze entspricht funktional einem verdrahteten Anschluss an lokale Netze (LANs), die sich heutzutage zum Standard in Büros entwickelt haben.

Allgemein wird für WLANs der nicht lizenzierte Frequenzbereich um 2,4 GHz genutzt. Datenübertragungsraten liegen bei bis zu 11 Mbit/s. Künftige WLANs könnten im 5 GHz Bereich betrieben werden und Datenraten von über 50 Mbit/s erreichen. Somit stehen den Teilnehmern der WLANs Datenraten zur Verfügung, die erheblich höher liegen, als diejenigen, die von der nächsten, dritten Mobilfunkgeneration (z.B. UMTS) angeboten werden. Damit ist für die Übertragung von großen Datenmengen, insbesondere in Verbindung mit Internetzugriffen der Zugriff auf WLANs für hochbitratige Verbindungen zu bevorzugen.

Mit WLAN kann ein drahtloses lokales Kommunikationsnetz aufgebaut werden, wobei Funkstationen per Funk über einen oder mehrere Sprünge (Hop, Multihop) und/oder über WLAN-Funkzugangspunkte (AP: Access Point) miteinander kommunizieren können. Über die WLAN-Funkzugangspunkte kann eine Anbindung an Breitband-Datennetze (BDN Broadband Data Networks) erfolgen. Oft werden WLANs als Ergänzung für kabelgestützte LANs in bestimmten Arbeitsumgebungen eingesetzt, so dass die Funkzugangspunkte, die gegebenenfalls über ein drahtgestütztes LAN miteinander verbunden sind, den Datentransport von einer Funkstation über das LAN weiterleiten. Jeder Funkzugangspunkt versorgt üblicherweise alle in seiner Funkreichweite bzw. in seinem Funkabdeckungsbereich befindlichen Funkstationen.

Befindet sich ein Funkzugangspunkt außerhalb der Funkreichweite einer Funkstation, so kann eine Datenübertragung zwischen der Funkstation und dem Funkzugangspunkt dadurch erfolgen, dass andere Funkstationen die Daten empfangen und weiterleiten. Hierzu bedarf es der Ermittlung eines Pfades zwischen der Funkstation und dem Funkzugangspunkt.

Das Dokument US 2003/0156558 A1 beschreibt ein System, in welchem eine Mobilstation feststellt, dass sie sich außerhalb der Reichweite aller Zugangspunkte befindet. Daraufhin versendet die Mobilstation eine Nachricht zur Zugangsanforderung, welche von anderen Mobilstationen an den Zugangspunkt weitergeleitet wird. Auf diese Weise wird ein Pfad zwischen der Mobilstation und dem Zugangspunkt ermittelt.

Insbesondere aufgrund der Mobilität von Funkstationen bleibt ein ermittelter Pfad jedoch nicht auf unbegrenzte Zeit erhalten. So ist es möglich, dass nach der Versendung von Daten der Sender eine Fehlermeldung empfängt, welche ihm mitteilt, dass der bislang verwendete Pfad ausgefallen ist, so dass die Daten aktuell nicht über diesen an den Empfänger übermittelt werden können. In diesem Fall initiiert der Sender, d.h. entweder die Funkstation oder der Funkzugangspunkt, erneut ein Verfahren zur Ermittlung eines Pfades zu dem Empfänger.

Der Erfindung liegt die Aufgabe zugrunde, ein Verfahren der eingangs genannten Art aufzuzeigen, welches einen sparsamen Umgang mit Funkressourcen bei der Ermittlung von Pfaden in einem Funkkommunikationssystem erlaubt. Weiterhin soll eine Funkstation zur Unterstützung eines solchen Verfahrens und ein Computerprogrammprodukt für eine solche Funkstation aufgezeigt werden.

Diese Aufgabe wird hinsichtlich des Verfahrens durch ein Verfahren mit den Merkmalen des Anspruchs 1 gelöst. Vorteilhafte Ausgestaltungen und Weiterbildungen sind Gegenstand von Unteransprüchen.

Das Funkkommunikationssystem umfasst einen Funkzugangspunkt und mehrere Funkstationen. Hierbei befindet sich der Funkzugangspunkt außerhalb der direkten Funkreichweite einer ersten Funkstation. Der Funkzugangspunkt benötigt Informationen über einen für eine Nachrichtenübertragung zwischen dem Funkzugangspunkt und der ersten Funkstation verwendbaren Pfad, wobei der Pfad eine oder mehrere weitere Funkstationen umfassen kann. Erfindungsgemäß erlangt die erste Funkstation nach dem Funkzugangspunkt Kenntnis über das Benötigen der Informationen, und initiiert anschließend ein Verfahren zur Ermittlung eines Pfades zwischen der ersten Funkstation und dem Funkzugangspunkt.

Der Funkzugangspunkt und die erste Funkstation können nicht direkt, d.h. ohne Zwischenschaltung von weiteren Funkstationen, miteinander kommunizieren, denn der Funkzugangspunkt befindet sich nicht innerhalb der Funkreichweite der ersten Funkstation. Vielmehr muss vor einer Nachrichtenübertragung ein Pfad zwischen der ersten Funkstation und dem Funkzugangspunkt ermittelt werden, über welchen die erste Funkstation und der Funkzugangspunkt miteinander kommunizieren können.

Das Initiieren eines Verfahrens zur Ermittlung eines Pfades kann z.B. darin bestehen, dass per Broadcast an benachbarte Funkstationen eine Anforderungsnachricht zur Ermittlung eines Pfades gesendet wird. Die konkrete Ausgestaltung der Ermittlung des Pfades ist für die Erfindung nicht von Relevanz. Entscheidend ist, dass die erste Funkstation, obwohl sie später als der Funkzugangspunkt davon erfährt, dass ein Pfad zwischen der ersten Funkstation und dem Funkzugangspunkt benötigt wird, das Verfahren zur Ermittlung eines Pfades anstößt, und nicht der Funkzugangspunkt.

Ein Pfad zwischen dem Funkzugangspunkt und der ersten Funkstation wird von dem Funkzugangspunkt in dem Fall benötigt, dass eine oder mehrere Nachrichten von dem Funkzugangspunkt an die erste Funkstation zu versenden sind, wie bei einem so genannten "mobile terminated call". Ist dem Funkzugangspunkt kein Pfad zu der ersten Funkstation bekannt, besteht die Möglichkeit, dass der Funkzugangspunkt ein Verfahren zur Ermittlung eines für die Nachrichtenübertragung verwendbaren Pfades initiiert. Gemäß der Erfindung erfährt jedoch die erste Funkstation, dass ein solcher Pfad ermittelt werden soll, woraufhin diese an Stelle des Funkzugangspunktes ein Verfahren zur Ermittlung eines Pfades initiiert.

Vorteilhaft ist es, wenn eine Basisstation vorhanden ist, die sich innerhalb des Funkabdeckungsbereiches des Funkzugangspunktes befindet und innerhalb deren Funkabdeckungsbereich sich die erste Funkstation befindet, und der Funkzugangspunkt die Basisstation benachrichtigt über das Benötigen der Informationen über einen Pfad, und die erste Funkstation Kenntnis über das Benötigen der Informationen aufgrund einer Benachrichtigung durch die Basisstation erlangt. Die Basisstation fungiert in diesem Fall als Bindeglied zwischen dem Funkzugangspunkt und der ersten Funkstation, welche die Aufgabe des Initiierens eines Verfahrens zur Ermittlung eines Pfades von dem Funkzugangspunkt auf die erste Funkstation überträgt. Die Benachrichtigung über die Benötigung eines Pfades kann explizit oder implizit sein, so kann beispielsweise die Benachrichtigung daraus bestehen, dass die erste Funkstation zur Ermittlung eines Pfades bzw. zum Initiieren eines Verfahrens zur Ermittlung eines Pfades aufgefordert wird.

Die Basisstation ist derart positioniert, dass sie Funksignale von dem Funkzugangspunkt empfangen kann und dass die erste Funkstation Funksignale von ihr empfangen kann. Eine Basisstation kann hierbei Bestandteil eines beliebigen Funkkommunikationssystems sein, z.B. eine NodeB eines UMTS-Systems. Im Rahmen der Erfindung zeichnet sie sich lediglich dadurch aus, dass sie Signale von dem Funkzugangspunkt empfangen und - gegebenenfalls in modifizierter Form- an die erste Funkstation weiterleiten kann. Es ist auch möglich, an Stelle einer Basisstation mehrere miteinander verbundene Basisstationen zu verwenden, wobei eine erste Basisstation Signale von dem Funkzugangspunkt empfängt und eine zweite Basisstation Signale an die erste Funkstation sendet.

In Weiterbildung der Erfindung ist der ersten Funkstation und dem Funkzugangspunkt ein Pfad zwischen diesen bekannt, welcher eine oder mehrere weitere Funkstationen umfasst. Somit sind Informationen von der ersten Funkstation zu dem Funkzugangspunkt und von dem Funkzugangspunkt zu der ersten Funkstation über den Pfad übertragbar. Der Funkzugangspunkt empfängt Informationen über den Ausfall des bekannten Pfades von einer Funkstation des Pfades. Die erste Funkstation erlangt nach dem Funkzugangspunkt Kenntnis über den Ausfall des bekannten Pfades. Hieran anschließend initiiert sie ein Verfahren zur Ermittlung eines neuen Pfades zwischen der ersten Funkstation und dem Funkzugangspunkt.

Zur Versendung von Informationen von der ersten Funkstation zu dem Funkzugangspunkt und umgekehrt kennen die erste Funkstation und der Funkzugangspunkt einen Pfad, so dass sie den Pfad z.B. in ein Kopfteil (Header) eines zu versendenden Datenpaketes einfügen können. Im Falle, dass dieser Pfad ausfällt, erfährt im Rahmen der vorliegenden Erfindung zuerst der Funkzugangspunkt von dieser Störung. Ein Pfad kann zum Beispiel dann ausfallen, wenn sich eine Funkstation, welche Bestandteil des Pfades war, fortbewegt hat, oder wenn die Funkübertragung zwischen zwei benachbarten Funkstationen des Pfades gestört ist. Später erlangt die erste Funkstation Kenntnis über den Ausfall des ihr bekannten Pfades. Nachdem ihr die Unterbrechung des Pfades bekannt ist, initiiert sie ein Verfahren zur Ermittlung eines neuen Pfades.

Das Ergebnis des Verfahrens zur Ermittlung eines neuen Pfades zwischen der Funkstation und dem Funkzugangspunkt wird in der Regel ein Pfad sein, welcher sich von dem bisher verwendeten, bekannten Pfad unterscheidet. Es ist jedoch auch möglich, dass im Laufe des Verfahrens zur Ermittlung des neuen Pfades eine Störung des bekannten Pfades behoben wird und somit der neue Pfad mit dem bekannten Pfad übereinstimmt.

In einer Weiterbildung der Erfindung empfängt der Funkzugangspunkt die Informationen über den Ausfall des bekannten Pfades aufgrund einer eigenen Versendung von Informationen für die erste Funkstation. So kann z.B. der Funkzugangspunkt Nutzdaten entlang dem Pfad an die erste Funkstation versenden. Bei einem Ausfall des Pfades erhält der Funkzugangspunkt dann eine Fehlermeldung zurückübermittelt.

Vorteilhafterweise versendet die erste Funkstation zur Ermittlung des Vorliegens eines Ausfalls des bekannten Pfades Informationen für den Funkzugangspunkt. Eine derartige Versendung von Informationen zur Ermittlung des Vorliegens eines Ausfalls kann insbesondere in regelmäßigen Zeitabständen erfolgen. Alternativ können die Zeitabstände der Versendung auch nach einem Algorithmus oder zufällig bestimmt werden. Durch nicht konstante Zeitabstände zwischen den Versendungen der Testdaten kann verschiedenen Bedingungen innerhalb des Funkkommunikationssystems, wie z.B. Dichte der Funkstationen oder Mobilitätsprofile, Rechnung getragen werden.

Die erste Funkstation kann Kenntnis über den Ausfall des bekannten Pfades aufgrund der Versendung der Informationen zur Ermittlung des Vorliegens eines Ausfalls erlangen. So können zum Beispiel Testdaten von der ersten Funkstation über den Pfad an den Funkzugangspunkt versendet werden. Bei einer Störung der Übertragung der Testdaten wird eine Fehlermeldung an die erste Funkstation zurückübertragen. In diesem Fall ist der ersten Funkstation bekannt, dass ein Ausfall des zuvor verwendeten Pfades vorliegt.

In einer Ausgestaltung der Erfindung versendet die erste Funkstation die Informationen zu Ermittlung des Vorliegens eines Ausfalls aufgrund von mindestens einer im Rahmen einer vorhergegangenen Ermittlung des bekannten Pfades versendeten Benachrichtigung. Dies kann z.B. dadurch realisiert werden, dass die erste Funkstation und/oder der Funkzugangspunkt signalisieren, dass sie im Falle eines Ausfalls des Pfades gemäß dem erfindungsgemäßen Verfahren vorgehen werden. Die erste Funkstation kann dieser Signalisierung bzw. diesem Signalisierungsaustausch entnehmen, dass sie Testdaten zur Ermittlung eines Ausfalls versenden muss. Ein derartiger Signalisierungsaustausch findet vorteilhafterweise im Rahmen der Ermittlung des Pfades, auf dessen zukünftigen Ausfall sie sich bezieht, statt.

In Weiterbildung der Erfindung ist eine Basisstation vorhanden, die sich innerhalb des Funkabdeckungsbereiches des Funkzugangspunktes befindet und innerhalb deren Funkabdeckungsbereich sich die erste Funkstation befindet. Der Funkzugangspunkt sendet der Basisstation Informationen über den Ausfall des bekannten Pfades. Die erste Funkstation erlangt Kenntnis über den Ausfall des bekannten Pfades aufgrund einer Benachrichtigung durch die Basisstation. In der beschriebenen Weiterbildung der Erfindung kann eine Versendung von Testdaten durch die erste Funkstation unterbleiben, da diese von der Basisstation informiert wird, falls der Funkzugangspunkt entdeckt, dass der Pfad zwischen der ersten Funkstation und dem Funkzugangspunkt aufgefallen ist.

Vorteilhafterweise sendet der Funkzugangspunkt der Basisstation die Informationen über den Ausfall des bekannten Pfades aufgrund von mindestens einer im Rahmen einer vorhergegangen Ermittlung des bekannten Pfades gesendeten Benachrichtigung.

So können sich z.B. die erste Funkstation und der Funkzugangspunkt bei dem Verfahren zur Ermittlung des ersten Pfades darauf einigen, dass der Funkzugangspunkt in dem Falle, dass er den Ausfall des Pfades entdeckt, die Basisstation benachrichtigt. In diesem Fall muss abgeklärt werden, ob sowohl der Funkzugangspunkt als auch die erste Funkstation derart ausgerüstet sind, dass eine Kommunikation mit der Basisstation für beide möglich ist.

Die oben genannte Aufgabe hinsichtlich der Funkstation für ein von nebengeordneten Ansprüchen gelöst.

Eine erste erfindungsgemäße Funkstation weist auf: Mittel zum Empfangen einer Benachrichtigung darüber, dass der Funkzugangspunkt Informationen benötigt über einen für eine Nachrichtenübertragung zwischen dem Funkzugangspunkt und der Funkstation verwendbaren Pfad umfassend eine oder mehrere weitere Funkstationen, und Mittel zum Initiieren eines Verfahrens zur Ermittlung eines Pfades zwischen der Funkstation und dem Funkzugangspunkt im Anschluss an den Empfang der Benachrichtigung.

Eine zweite erfindungsgemäße Funkstation weist Mittel zum Speichern eines Pfades zwischen der Funkstation und dem Funkzugangspunkt umfassend eine oder mehrere weitere Funkstationen auf, so dass Informationen von der Funkstation zu dem Funkzugangspunkt und von dem Funkzugangspunkt zu der Funkstation über den Pfad übertragbar sind. Weiterhin umfasst sie Mittel zum Versenden von Informationen für den Funkzugangspunkt zur Ermittlung des Vorliegens eines Ausfalls des gespeicherten Pfades, und Mittel zum Empfangen und Verarbeiten von Informationen über das Vorliegen eines Ausfalls des gespeicherten Pfades, sowie Mittel zum Initiieren eines Verfahrens zur Ermittlung eines neuen Pfades zwischen der Funkstation und dem Funkzugangspunkt im Anschluss an den Empfang von Informationen über das Vorliegen eines Ausfalls des gespeicherten Pfades.

Die erfindungsgemäßen Funkstationen eignen sich insbesondere zur Durchführung der teilnehmerseitigen Schritte des erfindungsgemäßen Verfahrens, wobei dies auch auf die Ausgestaltungen und Weiterbildungen zutreffen kann, und können zu diesem Zweck weitere Mittel und Vorrichtungen umfassen.

Die oben genannte Aufgabe hinsichtlich des Computerprogrammproduktes wird durch ein Computerprogrammprodukt mit den Merkmalen eines nebengeordneten Anspruchs gelöst.

Das erfindungsgemäße Computerprogrammprodukt für eine Funkstation dient zum Steuern von mindestens einer Versendung von Informationen für einen Funkzugangspunkt zur Ermittlung des Vorliegens eines Ausfalls eines Pfades zwischen der Funkstation und dem Funkzugangspunkt. Insbesondere kann mit dem Computerprogrammprodukt eine regelmäßige Versendung von derartigen Informationen gesteuert werden.

Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Das erfindungsgemäße Computerprogrammprodukt eignet sich insbesondere für eine erfindungsgemäße Funkstation und kann zur Durchführung des erfindungsgemäßen Verfahrens eingesetzt werden. Hierzu kann es weitere Funktionalitäten aufweisen, d.h. bezüglich des Computerprogrammproduktes kann das Computerprogramm Programmabschnitte zur Durchführung des oben beschriebenen und/oder des im Ausführungsbeispiel unten zu beschreibenden Verfahrens vorsehen.

Im Folgenden wird die Erfindung anhand eines Ausführungsbeispiels näher erläutert. Dabei zeigen
- Figur 1:: ein Funkkommunikationssystem in Form eines WLAN,
- Figur 2:: einen Pfad innerhalb eines WLAN zur Verdeutlichung eines ersten erfindungsgemäßen Verfahrensablaufs,
- Figur 3:: einen Pfad innerhalb eines WLAN zur Verdeutlichung eines zweiten erfindungsgemäßen Verfahrensablaufs,
- Figur 4:: eine erfindungsgemäße Funkstation.

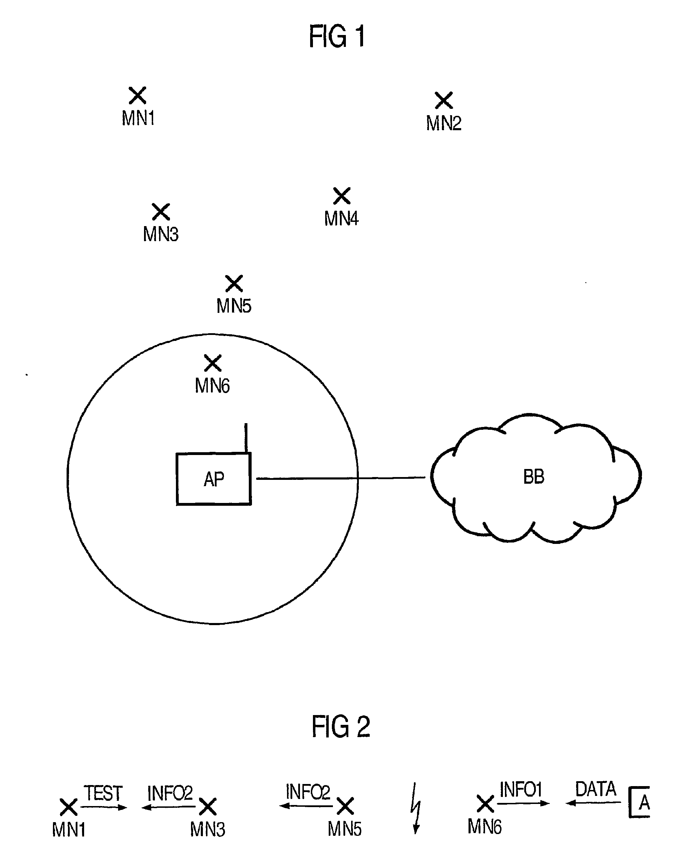

Figur 1 zeigt ein WLAN, welches einen Funkzugangspunkt AP und die mobilen Funkstationen MN1, MN2, MN3, MN4, MN5 und MN6 umfasst. Der Funkzugangspunkt AP ist mit einem Backbone-Netz BB verbunden, so dass aufgrund von Verbindungen des Backbone-Netzes mit anderen Netzen für die Funkstationen MN1, MN2, MN3, MN4, MN5 und MN6 eine Kommunikation mit anderen Kommunikationssystemen oder Datennetzen möglich ist. Der direkte Funkabdeckungsbereich des Funkzugangspunktes AP ist in Figur 1 durch einen Kreis gekennzeichnet. Innerhalb des Funkabdeckungsbereiches des Funkzugangspunktes AP befindet sich somit die Funkstation MN6.

Im folgenden wird der Fall betrachtet, dass die Funkstation MN1 Kontakt zu dem Funkzugangspunkt AP aufnehmen will. Da die Funkstation MN1 sich nicht innerhalb des Funkabdeckungsbereiches des Funkzugangspunktes AP befindet, muss die Datenübertragung zwischen der Funkstation MN1 und dem Funkzugangspunkt AP über einen Pfad, welcher durch andere, die Daten weiterleitende Funkstationen gebildet wird, stattfinden. Somit muss vor der Kommunikation zwischen der Funkstation MN1 und dem Funkzugangspunkt AP ein Pfad ermittelt werden.

Bevor die Funkstation MN1 ein Verfahren zur Ermittlung eines Pfades zu dem Funkzugangspunkt AP initiiert, überprüft sie zuerst, ob sie einen solchen Pfad gespeichert hat. Ist dies gegeben, so fügt sie diesen Pfad in den Header eines an den Funkzugangspunkt AP zu versendenden Datenpaketes ein.

Hat die Funkstation MN1 keinen Pfad zu dem Funkzugangspunkt gespeichert, so wird das Verfahren zur Ermittlung eines Pfades zwischen der Funkstation MN1 und dem Funkzugangspunkt AP dadurch initiiert, dass die Funkstation MN1 eine Anforderungsnachricht zur Pfadsuche (RREQ, Route Request) aussendet. Diese Anforderungsnachricht beinhaltet eine Identifikationsinformation der Anforderung (Request ID), eine Anzahl an maximalen Hops des zu ermittelnden Pfades, welche nicht überschritten werden sollte, sowie die Adresse des Senders, d.h. der Funkstation MN1, und die Adresse des Empfängers, d.h. des Funkzugangspunktes AP.

Jede Funkstation, welche die Anforderungsnachricht zur Pfadermittlung empfängt, überprüft zuerst, ob sie einen solchen Pfad zu der Zielstation gespeichert hat. Ist dies gegeben, so fügt sie den gespeicherten Pfad zu dem in der gegebenenfalls weitergeleiteten Anforderungsnachricht enthaltenen Teilpfad hinzu und sendet den somit vollständigen Pfad im Rahmen einer Antwortnachricht (RREP, Route Reply) per Unicast bzw. Einzelsenderuf an die nächste Funkstation auf den Rückweg zur sendenden Funkstation zurück. Hat hingegen eine Funkstation, welche die Anforderungsnachricht bzw. die weitergeleitete Anforderungsnachricht empfängt, einen geeigneten Pfad nicht gespeichert, überprüft sie die Identifikationsinformation der Anforderungsnachricht. Stellt sie dadurch fest, dass sie diese Anforderungsnachricht bereits zuvor empfangen hat, wird die Anforderungsnachricht verworfen und nicht erneut weitergeleitet. Anderenfalls zieht sie den Wert 1 von dem in der Anforderungsnachricht enthaltenen Hopzähler (Hop Counter) ab, fügt die eigene Adresse in die Anforderungsnachricht ein, und sendet die Anfrage per Broadcast weiter. Erreicht der Hopzähler den Wert 0, so wird die Anforderungsnachricht verworfen.

Die Funkstation MN3 empfängt zuerst die per Broadcast ausgesendete Anforderungsnachricht der Funkstation MN1 und leitet sie wie oben beschrieben weiter. Erreicht die Anforderungsnachricht auf diese Weise über die Funkstationen MN5 und MN6 den Funkzugangspunkt AP, sendet dieser eine Antwortnachricht (RR, Route Reply) zur sendenden Funkstation MN1 über den ermittelten Pfad per Unicast zurück. Diese Antwortnachricht umfasst den vollständigen Pfad von der Funkstation MN1 zu dem Funkzugangspunkt AP. Alle Funkstationen MN6, MN5 und MN3 entlang des Pfades speichern diese Pfadinformation. Auf diese Weise wird ein Pfad zwischen der Funkstation MN1 und dem Funkzugangspunkt AP ermittelt, welcher die Funkstationen MN3, MN5 und MN6 umfasst.

Im folgenden initiiert die Funkstation MN2 ein Verfahren zur Ermittlung eines Pfades zu dem Funkzugangspunkt AP. Die Funkstation MN2 sendet eine Anforderungsnachricht zur Ermittlung eines Pfades per Broadcast aus, welche von der Funkstation MN4 empfangen und weitergeleitet wird. Als nächstes empfängt die Funkstation MN5 die Anforderungsnachricht zur Ermittlung eines Pfades und stellt fest, dass sie den Teilpfad zwischen der Funkstation MN5 und dem Funkzugangspunkt AP aufgrund der vorhergegangenen Pfadermittlung zwischen der Funkstation MN1 und dem Funkzugangspunkt AP gespeichert hat. Daraufhin konstruiert die Funkstation MN5 den vollständigen Pfad zwischen der Funkstation MN2 und dem Funkzugangspunkt AP durch Zusammenfügen der Teilinformationen aus der Anforderungsnachricht und der gespeicherten Pfadinformation und sendet den vollständigen Pfad als Antwort über die Funkstation MN4 zurück zur Funkstation MN2.

Im betrachteten Beispiel, in welchem zuerst ein Pfad zwischen der Funkstation MN1 und dem Funkzugangspunkt AP und im folgenden ein Pfad zwischen der Funkstation MN2 und dem Funkzugangspunkt AP ermittelt wurde, wobei das Verfahren zur Ermittlung des Pfades jeweils von der Funkstation MN1 bzw. MN2 angestoßen wurde, erfolgte sechsmal eine Versendung einer Anforderungsnachricht zur Pfadermittlung per Broadcast und sechsmal eine Antwortnachricht, welche den jeweiligen Pfad enthielt, per Unicast.

Zum Vergleich wird nun der Fall betrachtet, dass die Verfahren zur Ermittlung der Pfade zwischen den Funkstationen MN1 und MN2 und dem Funkzugangspunkt AP von dem Funkzugangspunkt AP initiiert werden. Zuerst soll der Pfad zwischen dem Funkzugangspunkt AP und der Funkstation MN1 ermittelt werden. Hierzu sendet der Funkzugangspunkt AP per Broadcast eine Anforderungsnachricht zur Pfadermittlung an seine benachbarten Funkstationen aus. Die Funkstation MN6 empfängt diese Anforderungsnachricht und leitet sie weiter. Auf die oben beschriebene Weise wird die Anforderungsnachricht bis hin zur Funkstation MN1 weitergeleitet. Nachdem diese die Anforderungsnachricht empfangen hat, sendet sie eine Antwortnachricht, welche den vollständig ermittelten Pfad umfasst, entlang dieses Pfades zurück zu dem Funkzugangspunkt AP. Die Funkstationen entlang des Pfades, d.h. die Funkstationen MN3, MN5 und MN6 speichern den ermittelten Pfad.

Nun initiiert der Funkzugangspunkt AP das Verfahren zur Ermittlung eines Pfades zu der Funkstation MN2. Hierzu sendet er per Broadcast eine Anforderungsnachricht zur Ermittlung des Pfades aus, welche von der Funkstation MN6 empfangen und weitergeleitet wird. Nachdem die Funkstation MN5 die Anforderungsnachricht empfangen hat, stellt sie fest, dass sie den gesuchten Pfad nicht gespeichert hat und leitet die Anforderungsnachricht weiter an die Funkstation MN4. Nachdem die Anforderungsnachricht von der Funkstation MN2 empfangen wurde, sendet sie den vollständigen ermittelten Pfad im Rahmen einer Antwortnachricht über den ermittelten Pfad zurück zum Funkzugangspunkt AP.

Zur Ermittlung der Pfade zwischen dem Funkzugangspunkt AP und den Funkstationen MN1 und MN2 sind gemäß obigen Ausführungen acht Aussendungen von Anforderungsnachrichten zur Pfadermittlung und acht Antwortnachrichten, welche den vollständigen Pfad enthielten, nötig. Dem betrachteten Beispiel kann entnommen werden, dass zur Ermittlung von Pfaden innerhalb des betrachteten Funkkommunikationssystems eine verschiedene Anzahl an Signalisierungsnachrichten nötig ist, abhängig davon, ob das Verfahren zur Ermittlung des Pfades von einer Funkstation oder von dem Funkzugangspunkt initiiert wird.

Nach erfolgreicher Ermittlung eines Pfades zwischen einer Funkstation und dem Funkzugangspunkt AP kann dieser Pfad zur Übermittlung von Nachrichten zwischen der Funkstation und dem Funkzugangspunkt AP verwendet werden. Hierzu überprüft jede Funkstation des Pfades bei Empfang eines Datenpaketes, ob sie der Empfänger des Datenpaketes ist. Ist dies nicht der Fall, so wird das empfangene Datenpaket zu der gemäß dem in dem Header des Datenpaketes enthaltenen Pfad nächsten Funkstationen per Unicast weitergeleitet. Wenn die nächste Funkstation das weitergeleitete Paket empfangen hat, sendet sie eine positive Bestätigungsmeldung (ACK, Acknowledge) zurück zur das Paket weiterleitenden Funkstation. Bleibt eine solche positive Bestätigung aus, d.h. wurde das Datenpaket nicht erfolgreich weitergeleitet, so sendet die Funkstation, welche keine positive Bestätigungsmeldung empfangen hat, eine Fehlermeldung zurück über den Pfad zur das Datenpaket ursprünglich aussendenden Funkstation. Empfängt die das Datenpaket ursprünglich aussende Funkstation bzw. der Funkzugangspunkt AP eine solche Fehlermeldung, so wird die Information über den ausgefallenen Pfad aus dem Speicher gelöscht. Hieraufhin initiiert die die Fehlermeldung empfangende Funkstation bzw. der Funkzugangspunkt AP gemäß dem Stand der Technik ein Verfahren zur Ermittlung eines neuen Pfades.

In Figur 2 ist der Fall dargestellt, dass ein Pfad zwischen der Funkstation MN1 und dem Funkzugangspunkt AP ermittelt wurde, welcher die Funkstationen MN3, MN5 und MN6 umfasst. Nach der Ermittlung dieses Pfades sendet der Funkzugangspunkt AP Daten DATA an die Funkstation MN6, welche an die Funkstation MN1 unter Verwendung des ermittelten Pfades adressiert sind. Die Funkstation MN6 erkennt anhand des Headers der Daten DATA, dass diese über den Pfad über die Funkstationen MN5 und MN3 an die Funkstation MN1 weiterzuleiten sind. Daher sendet sie die Daten per Einzelsenderuf an die Funkstation MN5 weiter. Zusätzlich sendet die Funkstation MN6 eine positive Empfangsbestätigung an den Funkzugangspunkt AP.

Im folgenden wird davon ausgegangen, dass die Verbindung zwischen den Funkstationen MN6 und MN5 gestört ist, so dass die Funkstation MN5 die Daten DATA nicht von der Funkstation MN6 empfangen kann. Der ermittelte Pfad zwischen der Funkstation MN1 und dem Funkzugangspunkt AP ist somit ausgefallen und kann aktuell nicht zur Datenübertragung verwendet werden. Aufgrund des Ausbleibens einer positiven Empfangsbestätigung von der Funkstation MN5 sendet die Funkstation MN6 eine Nachricht INF01 zurück an den Funkzugangspunkt AP, welche den Funkzugangspunkt AP darüber informiert, dass der ermittelte Pfad zwischen der Funkstation MN1 und dem Funkzugangspunkt AP ausgefallen ist. Diese Nachricht INF01 kann insbesondere auch Informationen darüber enthalten, an welcher Position des Pfades der Ausfall erfolgt ist.

Da es, wie oben dargelegt, unvorteilhaft ist, wenn der Funkzugangspunkt AP das Verfahren zur Ermittlung eines Pfades zur Funkstation MN1 initiiert, unterbleibt die Versendung einer Anforderungsnachricht zur Pfadermittlung durch den Funkzugangspunkt AP. Vielmehr sendet die Funkstation MN1 in regelmäßigen Zeitabständen eine Nachricht TEST über den ermittelten Pfad zu dem Funkzugangspunkt AP. Die Nachricht TEST dient der Überprüfung, ob ein Ausfall des ermittelten Pfades zwischen der Funkstation MN1 und dem Funkzugangspunkt AP vorliegt. Die Nachricht TEST wird daher entlang dem Pfad von der Funkstation MN3 und der Funkstation MN5 weitergeleitet. Da die Funkstation MN5 aufgrund des Ausfalls des Pfades zwischen der Funkstation MN5 und der Funkstation MN6 keine positive Empfangsbestätigung der Nachricht TEST von der Funkstation MN6 empfängt, sendet sie eine Nachricht INFO2 zurück über die Funkstation MN3 an die Funkstation MN1, welche die Funkstation MN1 über den Ausfall des Pfades und gegebenenfalls auch über die Position des Ausfalls benachrichtigt.

Aufgrund der Tatsache, dass nun auch die Funkstation MN1 davon Kenntnis hat, dass der zuvor ermittelte Pfad ausgefallen ist, kann sie ein Verfahren zur Ermittlung eines neuen Pfades initiieren. Das Verfahren zur Ermittlung des neuen Pfades kann verschiedenartig ausgestaltet sein. Von Bedeutung ist, dass zwar der Funkzugangspunkt AP zuerst von dem Ausfall des ermittelten Pfades Kenntnis erlangt hat, jedoch nicht dieser das Verfahren zur Ermittlung des neuen Pfades initiiert, sondern die Funkstation MN1.

Vorteilhaft ist, wenn eine regelmäßige Versendung von Nachrichten TEST durch die Funkstation MN1 bei der Ermittlung des ersten Pfades zwischen der Funkstation MN1 und dem Funkzugangspunkt AP vereinbart wurde. Eine solche Vereinbarung kann z.B. dadurch getroffen werden, dass der Funkzugangspunkt AP mit der Antwortnachricht, welche den vollständigen ermittelten Pfad umfasst, bei der ersten Pfadermittlung anzeigt, dass er kein Verfahren zur Ermittlung eines neuen Pfades initiieren wird, falls der Pfad ausfällt. In diesem Fall ist der Funkstation MN1 bekannt, dass es ihre Aufgabe ist, ein solches Verfahren zur Ermittlung eines neuen Pfades zu initiieren, falls der verwendete Pfad ausfällt. Daher sendet sie in regelmäßigen Zeitabständen Nachrichten TEST, um zu überprüfen, ob ein Ausfall des Pfades vorliegt.

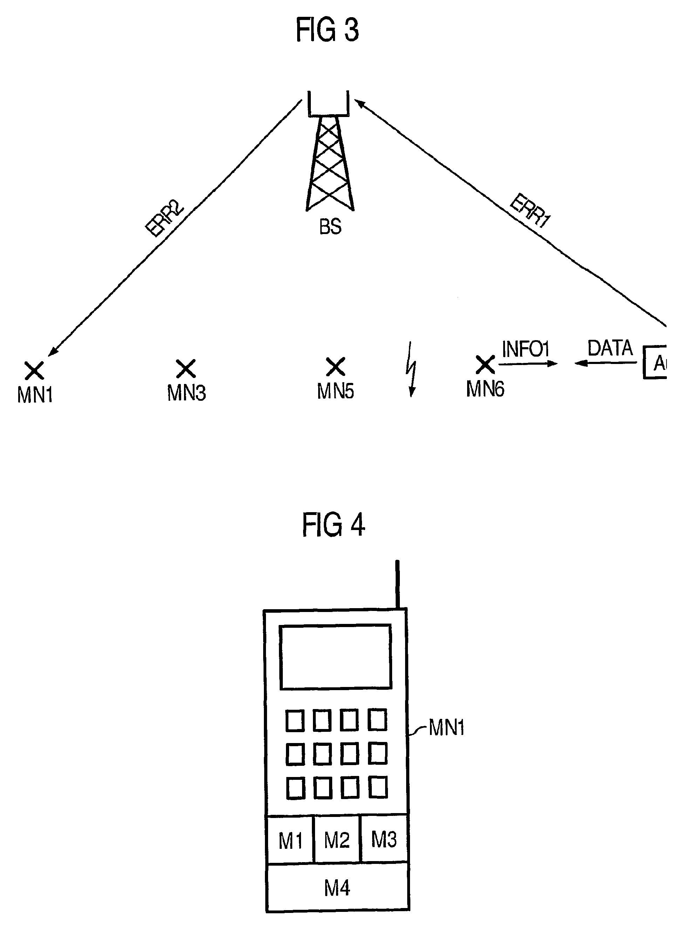

In Figur 3 wird eine Konstellation betrachtet, bei welcher sich sowohl die Funkstation MN1 als auch der Funkzugangspunkt AP innerhalb des Funkabdeckungsbereiches einer Basisstation BS befinden. Bei der Basisstation BS kann es sich zum Beispiel um eine NodeB eines Funkkommunikationssystems der dritten Generation handeln. Es wird davon ausgegangen, dass die Funkstationen sowohl mit der Basisstation BS des zellularen Funkkommunikationssystems, als auch mit dem Funkzugangspunkt AP des WLAN kommunizieren können, sie weisen somit zwei Funksschnittstellen auf. Die Basisstation BS ist ihrerseits mit einem Kernnetz verbunden, welches insbesondere auch mit dem Backbone-Netz des Funkzugangspunktes AP verbunden sein kann.

Wie oben bereits beschrieben, entdeckt der Funkzugangspunkt AP, dass der Pfad zwischen der Funkstation MN1 und dem Funkzugangspunkt AP ausgefallen ist, indem er Daten DATA versendet, woraufhin die Funkstation MN6 eine Nachricht INFO1 zurücksendet, welche Informationen über den Ausfall des Pfades beinhaltet. Daraufhin sendet der Funkzugangspunkt AP eine Fehlermeldung ERR1 an die Basisstation, welche die Basisstation BS darüber informiert, dass der Pfad zwischen der Funkstation MN1 und dem Funkzugangspunkt AP ausgefallen ist. Da die Basisstation BS keine Kenntnisse über die aktuelle Netzwerktopologie besitzt, ist sie nicht in der Lage, einen neuen Pfad zwischen der Funkstation MN1 und dem Funkzugangspunkt AP zu bestimmen und diesen an die Funkstationen und den Funkzugangspunkt weiterzuleiten. Vielmehr sendet die Basisstation BS eine Fehlermeldung ERR2 an die Funkstation MN1, mittels welcher die Funkstation MN1 davon in Kenntnis gesetzt wird, dass der Pfad zwischen der Funkstation MN1 und dem Funkzugangspunkt AP ausgefallen ist. Die Nachricht ERR2 kann die Benennung der Position des Ausfalls umfassen. Nach Empfang der Fehlermeldung ERR2 initiiert die Funkstation MN1 ein Verfahren zur Ermittlung eines neuen Pfades zwischen der Funkstation MN1 und dem Funkzugangspunkt AP. Auch in dieser zweiten Ausführungsform der Erfindung erfährt die Funkstation MN1 somit erst nach dem Funkzugangspunkt AP von dem Ausfall des zuvor verwendeten Pfades. Dennoch wird das Verfahren zur Ermittlung eines neuen Pfades nicht von dem Funkzugangspunkt AP initiiert, sondern von der Funkstation MN1.

Vorteilhafterweise sollten sich die Funkstation MN1 und der Funkzugangspunkt AP bei der vorhergehenden Ermittlung eines Pfades darauf einigen, dass bei Ausfall dieses Pfades wie in Figur 3 dargestellt vorgegangen werden soll. Die Funkstation MN1 und der Funkzugangspunkt AP sollten sich hierzu gegenseitig mitteilen, dass sie jeweils in der Lage sind, mit der Basisstation BS zu kommunizieren. Dieses kann im Rahmen der Anforderungsnachricht zur Ermittlung des Pfades und im Rahmen der dazugehörigen Antwortnachricht, welche den vollständig ermittelten Pfad umfasst, erfolgen. Zeigen sowohl die Funkstation MN1 als auch der Funkzugangspunkt AP an, dass sie aufgrund ihrer Funkschnittstellen mit der Basisstation BS kommunizieren können, so entspricht dies der Vereinbarung, dass in dem Fall, dass der Funkzugangspunkt AP den Ausfall des Pfades bemerkt, dieser Ausfall der Funkstation MN1 über die Basisstation BS mitgeteilt wird, woraufhin die Funkstation MN1 das Verfahren zur Ermittlung eines neuen Pfades initiiert.

Entdeckt in einer der beiden Situationen gemäß Figur 2 oder gemäß Figur 3 die Funkstation MN1 zuerst den Ausfall des zur Kommunikation verwendeten Pfades, so kann diese, wie es der herkömmlichen Vorgehensweise entspricht, das Verfahren zur Ermittlung eines neuen Pfades initiieren.

Figur 4 zeigt eine erfindungsgemäße Funkstation MN1 zur Durchführung des beschriebenen Verfahrens. Diese weist Mittel M1 zum Speichern eines einmal ermittelten Pfades auf, sowie Mittel M2 zum Versenden von Daten für den Funkzugangspunkt zur Überprüfung, ob ein Ausfall des zur Kommunikation benutzten Pfades vorliegt, sowie Mittel M3 zum Empfangen und Verarbeiten von Informationen über einen Ausfall des Pfades, und schließlich Mittel M4 zum Initiieren eines Verfahrens zur Ermittlung eines neuen Pfades. Die Mittel M4 können bei der vorhergehenden Ermittlung eines Pfades zwischen der Funkstation MN1 und dem Funkzugangspunkt eingesetzt werden, insbesondere jedoch im Anschluss an den Empfang einer Nachricht, welche den Ausfall dieses Pfades anzeigt.

Der beschriebene Fall des Ausfalls eines bekannten Pfades ist lediglich ein Beispiel für eine Situation, in welcher die Erfindung zum Einsatz kommen kann. Im Allgemeinen ist die Erfindung auf Situationen anwendbar, in welchen ein Funkzugangspunkt zuerst Kenntnis darüber hat, dass ein Pfad zwischen dem Funkzugangspunkt und einer Funkstation benötigt wird, und die Funkstation danach diese Kenntnis erlangt. Die Ermittlung des Pfades wird dann gemäß der Erfindung nicht von dem Funkzugangspunkt, sondern von der Funkstation gestartet. Dieser Fall ist z.B. gegeben bei einem "mobile terminated call", d.h. wenn dem Funkzugangspunkt eine oder mehrere Nachrichten für die Funkstation vorliegen, ohne dass eine Verbindung zwischen dem Funkzugangspunkt und der Funkstation besteht bzw. ohne dass ein Pfad zwischen der Funkstation und dem Funkzugangspunkt bekannt ist.

## Patentansprüche

1. Verfahren zum Betreiben eines Funkkommunikationssystems, umfassend einen Funkzugangspunkt (AP) und mehrere Funkstationen (MN1, MN2, MN3, MN4, MN5, MN6),
wobei sich der Funkzugangspunkt (AP) außerhalb der direkten Funkreichweite einer ersten Funkstation (MN1) befindet, und
wobei der Funkzugangspunkt (AP) Informationen benötigt über einen für eine Nachrichtenübertragung zwischen dem Funkzugangspunkt (AP) und der ersten Funkstation (MN1) verwendbaren Pfad umfassend eine oder mehrere weitere Funkstationen (MN3, MN5, MN6),
**dadurch gekennzeichnet,**
**dass** die erste Funkstation (MN1) nach dem Funkzugangspunkt (AP) Kenntnis über das Benötigen der Informationen erlangt, und
**dass** anschließend die erste Funkstation (MN1) ein Verfahren zur Ermittlung eines Pfades zwischen der ersten Funkstation (MN1) und dem Funkzugangspunkt (AP) initiiert.

2. Verfahren nach Anspruch 1, **dadurch gekennzeichnet,**
**dass** eine Basisstation (BS) vorhanden ist, die sich innerhalb des Funkabdeckungsbereiches des Funkzugangspunktes (AP) befindet und innerhalb deren Funkabdeckungsbereich sich die erste Funkstation (MN1) befindet, und
**dass** der Funkzugangspunkt (AP) die Basisstation (BS) benachrichtigt über das Benötigen der Informationen über einen Pfad, und
**dass** die erste Funkstation (MN1) Kenntnis über das Benötigen der Informationen aufgrund einer Benachrichtigung (ERR2) durch die Basisstation (BS) erlangt.

3. Verfahren nach Anspruch 1 oder 2, **dadurch gekennzeichnet,**
**dass** der ersten Funkstation (MN1) und dem Funkzugangspunkt (AP) ein Pfad zwischen der ersten Funkstation (MN1) und dem Funkzugangspunkt (AP) umfassend eine oder mehrere weitere Funkstationen (MN3, MN5, MN6) bekannt ist, so dass Informationen von der ersten Funkstation (MN1) zu dem Funkzugangspunkt (AP) und von dem Funkzugangspunkt (AP) zu der ersten Funkstation (MN1) über den Pfad übertragbar sind, und
**dass** der Funkzugangspunkt (AP) Informationen über den Ausfall des bekannten Pfades von einer Funkstation (MN3) des Pfades empfängt,
**dass** die erste Funkstation (MN1) nach dem Funkzugangspunkt (AP) Kenntnis über den Ausfall des bekannten Pfades erlangt, und
**dass** anschließend die erste Funkstation (MN1) ein Verfahren zur Ermittlung eines neuen Pfades zwischen der ersten Funkstation (MN1) und dem Funkzugangspunkt (AP) initiiert.

4. Verfahren nach Anspruch 3, **dadurch gekennzeichnet,**
**dass** der Funkzugangspunkt (AP) die Informationen über den Ausfall des bekannten Pfades aufgrund einer eigenen Versendung von Informationen (DATA) für die erste Funkstation (MN1) empfängt.

5. Verfahren nach einem der Ansprüche 3 oder 4, **dadurch gekennzeichnet,**
**dass** die erste Funkstation (MN1) zur Ermittlung des Vorliegens eines Ausfalls des bekannten Pfades Informationen (TEST) für den Funkzugangspunkt (AP) versendet.

6. Verfahren nach Anspruch 5, **dadurch gekennzeichnet,**
**dass** die Versendung der Informationen (TEST) zur Ermittlung des Vorliegens eines Ausfalls in regelmäßigen Zeitabständen erfolgt.

7. Verfahren nach einem der Ansprüche 5 oder 6, **dadurch gekennzeichnet,**
**dass** die erste Funkstation (MN1) Kenntnis über den Ausfall des bekannten Pfades aufgrund der Versendung der Informationen (TEST) zur Ermittlung des Vorliegens eines Ausfalls erlangt.

8. Verfahren nach einem der Ansprüche 5 bis 7, **dadurch gekennzeichnet,**
**dass** die erste Funkstation (MN1) die Informationen (TEST) zur Ermittlung des Vorliegens eines Ausfalls aufgrund von mindestens einer im Rahmen einer vorhergegangenen Ermittlung des bekannten Pfades versendeten Benachrichtigung versendet.

9. Funkstation (MN1) für ein Funkkommunikationssystem, umfassend einen Funkzugangspunkt (AP) und weitere Funkstationen (MN2, MN3, MN4, MN5, MN6),
**gekennzeichnet durch**
Mittel zum Empfangen einer Benachrichtigung darüber, dass der Funkzugangspunkt (AP) Informationen benötigt über einen für eine Nachrichtenübertragung zwischen dem Funkzugangspunkt (AP) und der Funkstation (MN1) verwendbaren Pfad umfassend eine oder mehrere weitere Funkstationen (MN3, MN5, MN6), und
Mittel (M4) zum Initiieren eines Verfahrens zur Ermittlung eines Pfades zwischen der Funkstation (MN1) und dem Funkzugangspunkt (AP) im Anschluss an den Empfang der Benachrichtigung.

10. Funkstation (MN1) für ein Funkkommunikationssystem, umfassend einen Funkzugangspunkt (AP) und weitere Funkstationen (MN2, MN3, MN4, MN5, MN6),
mit Mitteln (M1) zum Speichern eines Pfades zwischen der Funkstation (MN1) und dem Funkzugangspunkt (AP) umfassend eine oder mehrere der weiteren Funkstationen (MN3, MN5, MN6), so dass Informationen von der Funkstation (MN1) zu dem Funkzugangspunkt (AP) und von dem Funkzugangspunkt (AP) zu der Funkstation (MN1) über den Pfad übertragbar sind,
mit Mitteln (M2) zum Versenden von Informationen für den Funkzugangspunkt (AP) zur Ermittlung des Vorliegens eines Ausfalls des gespeicherten Pfades, und
mit Mitteln (M3) zum Empfangen und Verarbeiten von Informationen über das Vorliegen eines Ausfalls des gespeicherten Pfades, und
mit Mitteln (M4) zum Initiieren eines Verfahrens zur Ermittlung eines neuen Pfades zwischen der Funkstation
(MN1) und dem Funkzugangspunkt (AP) im Anschluss an den Empfang von Informationen über das Vorliegen eines Ausfalls des gespeicherten Pfades.

11. Computerprogrammprodukt für eine Funkstation (MN1) insbesondere nach Anspruch 10
zum Steuern von mindestens einer Versendung von Informationen für einen Funkzugangspunkt (AP) zur Ermittlung des Vorliegens eines Ausfalls eines Pfades zwischen der Funkstation (MN1) und dem Funkzugangspunkt (AP).

## Claims

1. Method for operating a radio communication system comprising a radio access point (AP) and a plurality of radio stations (MN1, MN2, MN3, MN4, MN5, MN6),
wherein the radio access point (AP) is located outside of the direct radio transmission range of a first radio station (MN1), and
wherein the radio access point (AP) requires information about a path comprising one or more further radio stations (MN3, MN5, MN6) which can be used for a message transfer between the radio access point (AP) and the first radio station (MN1),
**characterised in that**
the first radio station (MN1) learns about the requirement for the information after the radio access point (AP), and that the first radio station (MN1) then initiates a method for determining a path between the first radio station (MN1) and the radio access point (AP).

2. Method according to claim 1, **characterised in that**
a base station (BS) is present which is located within the radio coverage area of the radio access point (AP) and the first radio station (MN1) is located within its radio coverage area, and
that the radio access point (AP) notifies the base station (BS) about the requirement for the information about a path, and
that the first radio station (MN1) learns about the requirement for the information as a result of a notification (ERR2) by the base station (BS).

3. Method according to claim 1 or 2, **characterised in that**
a path comprising one or more further radio stations (MN3, MN5, MN6) between the first radio station (MN1) and the radio access point (AP) is known to the first radio station (MN1) and the radio access point (AP), with the result that information can be transferred from the first radio station (MN1) to the radio access point (AP) and from the radio access point (AP) to the first radio station (MN1) via the path, and
that the radio access point (AP) receives information about the failure of the known path from a radio station (MN3) of the path,
that the first radio station (MN1) learns about the failure of the known path after the radio access point (AP), and
that the first radio station (MN1) then initiates a method for determining a new path between the first radio station (MN1) and the radio access point (AP).

4. Method according to claim 3, **characterised in that**
the radio access point (AP) receives the information about the failure of the known path as a result of its own sending of information (DATA) for the first radio station (MN1).

5. Method according to one of claims 3 or 4,
**characterised in that**
the first radio station (MN1) sends information (TEST) for the radio access point (AP) for the purpose of determining the presence of a failure of the known path.

6. Method according to claim 5, **characterised in that**
the sending of the information (TEST) for the purpose of determining the presence of a failure takes place at regular time intervals.

7. Method according to one of claims 5 or 6,
**characterised in that**
the first radio station (MN1) learns about the failure of the known path as a result of the sending of the information (TEST) for the purpose of determining the presence of a failure.

8. Method according to one of claims 5 to 7,
**characterised in that**
the first radio station (MN1) sends the information (TEST) for the purpose of determining the presence of a failure as a result of at least one notification sent in the course of a preceding determination of the known path.

9. Radio station (MN1) for a radio communication system comprising a radio access point (AP) and further radio stations (MN2, MN3, MN4, MN5, MN6),
**characterised by**
means for receiving a notification that the radio access point (AP) requires information about a path comprising one or more further radio stations (MN3, MN5, MN6) which can be used for a message transfer between the radio access point (AP) and the radio station (MN1), and
means (M4) for initiating a method for determining a path between the radio station (MN1) and the radio access point (AP) following the reception of the notification.

10. Radio station (MN1) for a radio communication system comprising a radio access point (AP) and further radio stations (MN2, MN3, MN4, MN5, MN6),
having means (M1) for storing a path between the radio station (MN1) and the radio access point (AP) comprising one or more of the further radio stations (MN3, MN5, MN6), with the result that information can be transferred from the radio station (MN1) to the radio access point (AP) and from the radio access point (AP) to the radio station (MN1) via the path,
having means (M2) for sending information for the radio access point (AP) for the purpose of determining the presence of a failure of the stored path, and
having means (M3) for receiving and processing information about the presence of a failure of the stored path, and
having means (M4) for initiating a method for the purpose of determining a new path between the radio station (MN1) and the radio access point (AP) following the reception of information about the presence of a failure of the stored path.

11. Computer program product for a radio station (MN1), in particular according to claim 10,
for controlling at least one sending of information for a radio access point (AP) for the purpose of determining the presence of a failure of a path between the radio station (MN1) and the radio access point (AP).

## Revendications

1. Procédé pour exploiter un système de radiocommunication, comprenant un point d'accès radio (AP) et plusieurs stations radio (MN1, MN2, MN3, MN4, MN5, MN6), le point d'accès radio (AP) se trouvant en dehors de la portée radio directe d'une première station radio (MN1) et le point d'accès radio (AP) nécessitant des informations sur un chemin utilisable pour une transmission de messages entre le point d'accès radio (AP) et la première station radio (MN1) et comprenant une ou plusieurs autres stations radio (MN3, MN5, MN6), **caractérisé en ce que** la première station radio (MN1) prend connaissance du fait que les informations sont nécessaires après le point d'accès radio (AP) et **en ce que**, ensuite, la première station radio (MN1) initialise un procédé de détermination d'un chemin entre la première station radio (MN1) et le point d'accès radio (AP).

2. Procédé selon la revendication 1, **caractérisé par** la présence d'une station de base (BS) qui se trouve dans la zone de couverture radio du point d'accès radio (AP) et dans la zone de couverture radio de laquelle se trouve la première station radio (MN1) et en ce que le point d'accès radio (AP) avertit la station de base (BS) du fait que les informations sur un chemin sont nécessaires et en ce que la première station radio (MN1) prend connaissance du fait que les informations sont nécessaires à la suite d'un avertissement (ERR2) par la station de base (BS).

3. Procédé selon la revendication 1 ou 2, **caractérisé en ce qu'**un chemin entre la première station radio (MN1) et le point d'accès radio (AP), comprenant une ou plusieurs autres stations radio (MN3, MN5, MN6), est connu de la première station radio (MN1) et du point d'accès radio (AP) de sorte que des informations peuvent être transmises de la première station radio (MN1) vers le point d'accès radio (AP) et du point d'accès radio (AP) vers la première station radio (MN1) via le chemin et **en ce que** le point d'accès radio (AP) reçoit d'une station radio (MN3) du chemin des informations sur la défaillance du chemin connu, **en ce que** la première station radio (MN1) prend connaissance de la défaillance du chemin connu après le point d'accès radio (AP) et **en ce que**, ensuite, la première station radio (MN1) initialise un procédé de détermination d'un nouveau chemin entre la première station radio (MN1) et le point d'accès radio (AP).

4. Procédé selon la revendication 3, **caractérisé en ce que** le point d'accès radio (AP) reçoit les informations sur la défaillance du chemin connu à la suite d'un propre envoi d'informations (DATA) pour la première station radio (MN1).

5. Procédé selon l'une des revendications 3 ou 4, **caractérisé en ce que** la première station radio (MN1) envoie des informations (TEST) pour le point d'accès radio (AP) pour la détermination de la présence d'une défaillance du chemin connu.

6. Procédé selon la revendication 5, **caractérisé en ce que** l'envoi des informations (TEST) pour déterminer la présence d'une défaillance se fait à intervalles de temps réguliers.

7. Procédé selon l'une des revendications 5 ou 6, **caractérisé en ce que** la première station radio (MN1) prend connaissance de la défaillance du chemin connu à la suite de l'envoi des informations (TEST) pour la détermination de la présence d'une défaillance.

8. Procédé selon l'une des revendications 5 à 7, **caractérisé en ce que** la première station radio (MN1) envoie les informations (TEST) pour la détermination de la présence d'une défaillance à la suite d'au moins un avertissement envoyé dans le cadre d'une détermination précédente du chemin connu.

9. Station radio (MN1) pour un système de radiocommunication, comprenant un point d'accès radio (AP) et d'autres stations radio (MN2, MN3, MN4, MN5, MN6), **caractérisée par** des moyens pour recevoir un avertissement informant que le point d'accès radio (AP) nécessite des informations sur un chemin utilisable pour une transmission de messages entre le point d'accès radio (AP) et la station radio (MN1) et comprenant une ou plusieurs autres stations radio (MN3, MN5, MN6) et des moyens (M4) pour initialiser un procédé de détermination d'un chemin entre la station radio (MN1) et le point d'accès radio (AP) suite à la réception de l'avertissement.

10. Station radio (MN1) pour un système de radiocommunication, comprenant un point d'accès radio (AP) et d'autres stations radio (MN2, MN3, MN4, MN5, MN6), avec des moyens (M1) pour stocker un chemin entre la station radio (MN1) et le point d'accès radio (AP), comprenant une ou plusieurs des autres stations radio (MN3, MN5, MN6), de sorte que des informations peuvent être transmises de la station radio (MN1) vers le point d'accès radio (AP) et du point d'accès radio (AP) vers la station radio (MN1) via le chemin, des moyens (M2) pour envoyer des informations pour le point d'accès radio (AP) pour la détermination de la présence d'une défaillance du chemin stocké et des moyens (M3) pour recevoir et traiter des informations sur la présence d'une défaillance du chemin stocké et des moyens (M4) pour initialiser un procédé de détermination d'un nouveau chemin entre la station radio (MN1) et le point d'accès radio (AP) suite à la réception d'informations sur la présence d'une défaillance du chemin stocké.

11. Produit de programme informatique pour une station radio (MN1), en particulier selon la revendication 10, pour commander au moins un envoi d'informations pour un point d'accès radio (AP) pour déterminer la présence d'une défaillance d'un chemin entre la station radio (MN1) et le point d'accès radio (AP).
